Europäisches Patentamt

European Patent Office

Office européen des brevets

(11) Numéro de publication: **0 311 520**
**A1**

# (12) DEMANDE DE BREVET EUROPEEN

(21) Numéro de dépôt: 88402526.3

(22) Date de dépôt: 05.10.88

(51) Int. Cl.⁴: **B 29 C 47/50**
B 29 C 47/76

(30) Priorité: 06.10.87 FR 8713795

(43) Date de publication de la demande:
12.04.89 Bulletin 89/15

(84) Etats contractants désignés:
AT CH DE FR IT LI

(71) Demandeur: Mc NEIL AKRON REPIQUET
7, Boulevard de la Madeleine
F-75001 Paris (FR)

(72) Inventeur: Velluire, Maurice
96, rue des Chesneaux
F-95160 Montmorency (FR)

Ovtcharenko, Jean
13, rue Henri Brochard
F-95580 Margency (FR)

(74) Mandataire: Netter, André et al
Cabinet NETTER 40, rue Vignon
F-75009 Paris (FR)

(54) Procédé et machine pour la fabrication d'un produit fini par extrusion à partir d'une matière thermoplastique extrudable de nature hygroscopique.

(57) Procédé et machine de fabrication d'un produit fini par extrusion à partir d'une matière thermoplastique extrudable de caractère hygroscopique, en particulier du type ABS.

La matière thermoplastique à l'état brut et finement divisé est transformée, en une seule opération, sous l'action de la chaleur, en une masse fondue qui est dégazée et extrudée pour fournir directement le produit fini extrudé.

La machine comprend un premier fourreau (22) équipé de moyens d'alimentation (28) et de deux vis de transfert et un deuxième fourreau (30) équipé d'une seule vis de transfert, de prises de vide (40,42 et 44) pour le dégazage et d'une tête d'extrusion (38).

EP 0 311 520 A1

## Description

### Procédé et machine pour la fabrication d'un produit fini par extrusion à partir d'une matière thermoplastique extru-dable de nature hygroscopique.

L'invention concerne un procédé pour la fabrication d'un produit fini par extrusion à partir d'une matière thermoplastique extrudable de nature hygroscopique, en particulier d'une matière polymère de type styrénique. Elle concerne aussi une machine pour la mise en oeuvre de ce procédé.

Les matières thermoplastiques de ce genre sont très utilisées pour la fabrication de produits finis obtenus par extrusion et se présentant, par exemple, sous la forme de plaques ou de tubes. C'est le cas notamment des terpolymères acrylonitrile-butadiène-styrène, encore appelés ABS, qui sont des matières fortement hygroscopiques. Ces matières sont utilisées dans un grand nombre d'industries car elles permettent de fabriquer des objets moulés particulièrement résistants aux chocs.

Comme autres matières thermoplastiques de nature hygroscopique, on peut citer notamment celles du type chloré comme le polychlorure de vinyle ou PVC, les polyamides ou encore les polyméthacrylates.

On peut citer également des matières moins hygroscopiques comme celles du type oléfinique, notamment le polyéthylène ou le polypropylène, ou bien encore les polyesters.

Ces matières thermoplastiques sont fréquemment chargées, le plus souvent par des charges minérales, ce qui accroît encore leur caractère hygroscopique.

Jusqu'à présent, pour obtenir un produit fini extrudé à partir d'une matière thermoplastique de ce genre, en par ticulier à partir d'un terpolymère acrylonitrile-butadiène-styrène, on procède habituellement en deux opérations distinctes.

Dans une première opération, la matière première à l'état finement divisé, généralement sous forme pulvérulente, telle que produite par l'usine chimique de fabrication, est transformée en un produit intermédiaire, encore appelé "compound", qui se présente sous la forme de granulés. Ces derniers peuvent être constitués, par exemple, par des petits cubes ayant quelques millimètres de côté. Pour mettre en oeuvre cette première opération, on utilise une première machine qui assure la transformation de la matière première en une masse fondue qui est ensuite filée travers une tête d'extrusion et refroidie pour former les granulés. Ces derniers sont ensuite emballés dans des sacs et stockés jusqu'à leur utilisation en vue de la deuxième opération.

Au cours de cette deuxième opération, les granulés sont transformés en produit fini.pour cela, on utilise une deuxième machine qui assure la transformation des granulés en une masse fondue qui est travaillée et filée à travers une tête d'extrusion pour former le produit fini. Celui-ci, qui peut se présenter notamment sous la forme d'une plaque, est refroidi à la sortie de la tête d'extrusion. Il peut être ensuite utilisé tel quel ou bien subir d'autres transformations, par exemple par thermoformage.

Cette fabrication classique en deux opérations est particulièrement coûteuse en énergie puisqu'il faut d'abord chauffer la matière première dans la première machine pour la transformer en masse fondue, refroidir les granulés en sortie de la tête d'extrusion de la première machine, chauffer les granulés dans la deuxième machine pour les transformer en masse fondue et refroidir le produit fini à la sortie de la tête d'extrusion de la deuxième machine. Au surplus, comme les granulés sont eux-mêmes très hygroscopiques, il faut les déshydrater par séchage avant de les introduire dans la deuxième machine, ce qui constitue une dépense d'énergie supplémentaire.

Cette fabrication classique a aussi pour inconvénient d'entraîner des temps de production élevés et de nécessiter des stockages intermédiaires.

De plus, du fait que la matière subit plusieurs phases de transformation thermique, avec chauffage et refroidissement alternés, il en résulte, dans une certaine mesure, des altérations des propriétés de la matière du produit fini.

Par ailleurs, du fait de la nature hygroscopique de la matière thermoplastique, il faut assurer, à chaque opération, un dégazage particulier pour permettre notamment d'éliminer la vapeur d'eau.

Pour tenter de remédier aux inconvénients des procédés traditionnels en deux opérations, diverses solutions ont été proposées pour extruder, en une seule opération, un produit fini à partir d'une matière thermoplastique extrudable de nature hygroscopique se présentant à l'état brut et finement divisé.

Cependant, les solutions proposées n'ont pu permettre de fabriquer des produits finis de qualités comparables à celles des produits finis obtenus par les procédés conduits en deux opérations.

C'est, en conséquence, l'un des buts de l'invention de procurer un procédé de fabrication d'un produit fini par extrusion à partir d'une matière thermoplastique extrudable de caractère hygroscopique, qui permet d'éliminer les incon vénients ci-dessus.

C'est, en particulier, un but de l'invention de procurer un procédé beaucoup moins coûteux en énergie que les procédés connus.

C'est aussi un but de l'invention de procurer un procédé qui permet des temps de production courts et qui ne nécessite pas de stockage intermédiaire.

C'est encore un but de l'invention de procurer un tel procédé qui permet de fabriquer des produits finis ayant des propriétés physiques supérieures aux produits obtenus par les procédés traditionnels.

C'est encore un but de l'invention de procurer un tel procédé qui est spécialement applicable la fabrication de produits finis à partir de terpolymères du type acrylonitrile-butadiène-styrène.

C'est aussi un but de l'invention de procurer une machine pour la mise en oeuvre de ce procédé.

Le procédé de fabrication d'un produit fini par extrusion à partir d'une matière thermoplastique extrudable de caractère hygroscopique de l'invention est conduit en une seule opération et utilise comme matière première la matière thermoplastique à l'état brut et finement divisé. Il se caractérise en ce qu'on transforme d'abord la matière première, sous l'action de la chaleur, dans un premier fourreau horizontal équipé de deux vis parallèles de transfert, pour former une masse fondue et en ce qu'on dégaze et extrude ensuite cette masse fondue dans un second fourreau horizontal raccordé au premier fourreau et équipé d'une seule vis de transfert pour fournir directement le produit fini extrudé à partir de la matière première.

Dans le premier fourreau, la matière première est transférée par les deux vis avec un débit régulier qui peut être très élevé, et cela sans subir de cisaillement et d'échauffement excessif. On peut ainsi contrôler parfaitement la température et la viscosité de la matière première dans le premier fourreau. On obtient ainsi une masse fondue ou ramollie, mais non encore gélifiée.

La masse fondue est ensuite introduite, avec un débit régulier, dans le second fourreau où elle est travaillée par la vis de transfert, ce qui permet d'assurer le dégazage et la gélification de la matière en vue de son extrusion. Du fait que le cisaillement de la matière ne s'effectue que dans le second fourreau, le temps de séjour de la matière en fusion est réduit, ce qui permet d'éviter tout risque de dégradation de la matière.

Ainsi, conformément à l'invention, la fabrication du produit fini s'effectue en une seule opération à partir de la matière première à l'état brut, avec un procédé beaucoup moins coûteux en énergie que les procédés conventionnels, ce qui permet d'obtenir des coûts de production nettement moins élevés. En outre, les temps de production sont raccourcis et ne nécessitent pas de stockage intermédiaire. Par ailleurs, il a été constaté, de façon surprenante, que les produits finis obtenus par la mise en oeuvre du procédé de l'invention présentaient des qualités physiques supérieures à celles des produits obtenus par les procédés connus de la technique antérieure.

Le procédé de l'invention s'applique aux matières thermoplastiques extrudables de caractère hygroscopique, notamment aux polymères ou copolymères du type styrènique, oléfinique ou chloré.

Elle s'applique tout spécialement aux matières thermoplastiques du type terpolymères acrylonitrile-butadiène-styrène, encore appelés ABS.

Cependant, le procédé de l'invention peut s'appliquer à d'autres matières thermoplastiques hygroscopiques, par exemple aux polyamides, et aux polyméthacrylates, ou a d'autres matières moins hygroscopiques.

La matière thermoplastique utilisée comme matière première pour la mise en oeuvre du procédé de l'invention peut comprendre soit un seul constituant thermoplastique, soit une composition de plusieurs constituants thermoplastiques.

Il peut s'agir d'une matière non chargée ou bien d'une matière chargée, par exemple, par une charge de type minéral.

La matière première peut comprendre en outre des adjuvants solides ou liquides, également à l'état finement divisé, par exemple des anti-oxydants, des lubrifiants, des pigments, des ignifugeants, des agents auto-extinguibles, etc...

Sous un autre aspect, l'invention concerne une machine d'extrusion pour la mise en oeuvre du procédé, cette machine comprenant, de manière en soi connue, un premier fourreau horizontal muni de moyens d'alimentation en matière première et de moyens de transfert à vis et un second fourreau horizontal relié au premier fourreau par un canal de transfert et muni de moyens de transfert à vis. Une telle machine est caractérisée, conformément l'invention, par ce fait que le premier fourreau est équipé de deux vis parallèles de transfert et que le second fourreau est équipé d'une seule vis de transfert, de moyens de dégazage de la matière et d'une tête d'extrusion pour la fabrication directe du produit fini.

Une telle machine reprend, par conséquent, des éléments connus faisant partie des machines utilisées jusqu'à présent pour l'extrusion de granulés. Toutefois, conformément à l'invention, le deuxième fourreau est modifié pour permettre notamment le dégazage de la matière et aussi l'extrusion directe du produit fini.

Ces moyens de dégazage sont destinés à permettre l'évacuation de différentes vapeurs de la matière, en particulier des vapeurs de monomère volatil. Ces moyens de dégazage comprennent, conformément à l'invention, au moins une prise de vide reliée à une pompe à vide.

De préférence, on prévoit plusieurs prises de vide espacées sur la longueur du deuxième fourreau, en aval du canal de transfert, et situées à des emplacements où les moyens de transfert à vis du fourreau provoquent une détente de la matière traitée dans le fourreau. De cette manière, les vapeurs s'échappent plus facilement de la matière traitée et peuvent être évacuées vers l'extérieur. Pour réaliser cette évacuation, on peut utiliser une ou plusieurs pompes à vide, par exemple du type à anneau liquide, avec réglage de la valeur de la dépression.

Selon une autre caractéristique de l'invention, on prévoit en outre une prise de vide sur le second fourreau, mais en amont du canal de transfert, ce qui permet d'éliminer principalement l'humidité de la matière première.

Selon une autre caractéristique de l'invention, les moyens d'alimentation en matière première du premier fourreau sont équipés d'une unité de pesage-dosage pour la matière première et ses additifs éventuels.

De préférence, ces moyens d'alimentation sont équipés d'une unité de pesage-dosage et d'une unité de mélange.

Dans une forme de réalisation préférée de l'invention, on utilise une machine dans laquelle le premier fourreau et le second fourreau sont superposés dans un même plan vertical.

Dans la description qui suit, faite seulement à titre d'exemple, on se réfère aux dessins annexés, sur lesquels:

- la figure 1 est une vue en élévation latérale d'une machine d'extrusion selon l'invention;
- la figure 2 est une vue partielle d'une machine analogue à celle de la figure 1, dans laquelle les moyens d'alimentation en matière première du premier fourreau sont équipés d'une unité de pesage-dosage; et

- la figure 3 est une vue partielle d'une machine analogue à celle de la figure 1, dans laquelle les moyens d'alimentation en matière première du premier fourreau sont équipés d'une unité de pesage-dosage et d'une unité de mélange.

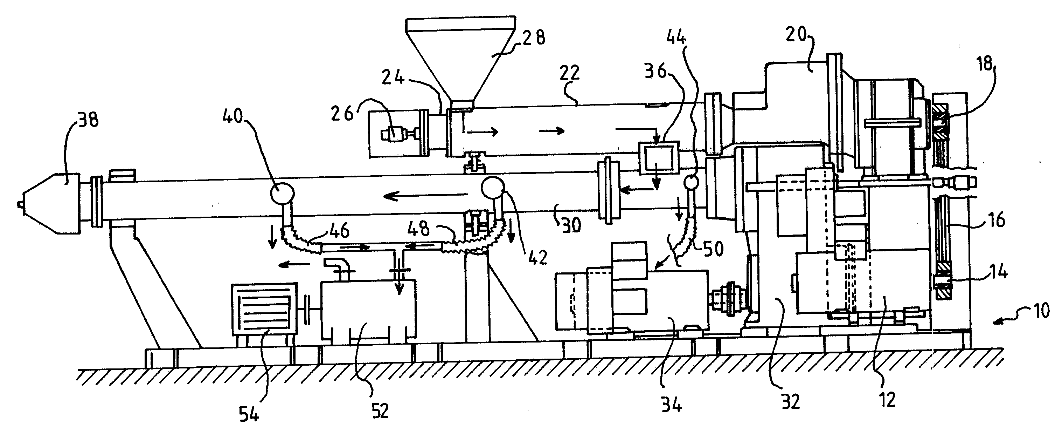

La structure générale de la machine représentée à la figure 1 s'apparente à celle de la machine d'extrusion selon la Demande de Brevet français n° 85 08489, déposée le 5 Juin 1985, au nom de la demanderesse. Toutefois, la machine d'extrusion de l'invention comporte des modifications essentielles pour lui permettre d'extruder des produits finis, en une seule opération, partir d'une matière thermoplastique extrudable de nature hygroscopique utilisée, en tant que matière première, à l'état brut et sous forme finement divisée.

La machine de la figure 1 comprend un bâti 10 supportant un moteur électrique 12 à vitesse variable, dont l'arbre sortie 14 est relié par des moyens de transmission 16 l'arbre d'entrée 18 d'un groupe réducteur-inverseur 20 également supporté par le bâti 10 et à une extrémité duquel est monté un premier fourreau cylindrique 22 horizontal dans lequel sont logées, de façon classique, deux vis horizontales parallèles (non représentées) dont les filets sont imbriqués l'un dans l'autre et qui s'étendent sur toute la longueur du fourreau 22.

A son extrémité opposée au groupe réducteur 20, le fourreau 22 comprend un chapeau 24 contenant les butées axiales des deux vis parallèles logées dans ce fourreau 22.

Les deux vis du fourreau 22 sont en général formées avec des canaux internes de circulation d'un fluide caloporteur, qui sont reliés, à leur extrémité située du côté des butées axiales, des moyens d'alimentation et d'évacuation de ce fluide, qui sont désignés généralement par la référence 26.

Au voisinage de son extrémité opposée au groupe réducteur 20, le fourreau 22 est également équipé d'une trémie 28 d'alimentation en matière première.

De façon classique, le groupe réducteur 20 permet d'entraîner les deux vis logées dans le fourreau 22 à la même vitesse de rotation, mais en sens contraire, pour l'acheminement de la matière dans le sens indiqué par les flèches à l'intérieur de ce fourreau.

Les extrémités des deux vis logées dans le fourreau 22, qui coopèrent avec les pignons du groupe réducteur 20, sont montées mobiles en translation axiale par rapport au pignon de sortie du groupe réducteur 20.

La machine comprend un second fourreau cylindrique horizontal 30, contenant une seule vis (non représentée) entraînée en rotation par un groupe réducteur 32 lui-même entraîné par un moteur électrique 34 à vitesse variable, ce réducteur 32 et ce moteur 34 étant portés également par le bâti 10.

Les deux fourreaux 22 et 30 sont superposés verticalement, le second fourreau 30 étant relié à son groupe réducteur d'entraînement 32 du même coté que le premier fourreau 22. Un conduit vertical 36, formant canal de transfert de la matière, relie les deux fourreaux 22 et 30, au voisinage de leurs extrémités fixées sur les groupes réducteurs 20 et 32. Ce conduit vertical 36 a une certaine longueur, les deux fourreaux 22 et 30 ne pouvant être accolés en raison de l'encombrement de leurs groupes réducteurs respectifs 20 et 32.

Ce conduit vertical 36 peut être équipé de moyens conventionnels d'acheminement de matière, si nécessaire, formant pompe ou accélérateur et qui sont par exemple du type à galets, à cames, à vis ou analogue. Le conduit 36 peut être également équipé de moyens de dégazage de la matière, bien que, normalement, ce dégazage soit assuré exclusivement par le second fourreau 30, comme on le verra plus loin.

Le second fourreau 30, au lieu d'avoir sensiblement la même longueur que le premier fourreau comme dans le cas de la machine de la Demande de Brevet français n° 85 08489, possède, conformément à l'invention, une longueur nettement supérieure à celle du premier fourreau. Dans l'exemple, la longueur du second fourreau 30 est au moins le double de la longueur du premier fourreau 22 pour les raisons qui seront indiquées plus loin.

L'extrémité libre du second fourreau 30, opposée au groupe réducteur 32, est munie d'une tête d'extrusion 38 permettant de fabriquer le produit fini directement, par exemple sous la forme d'une plaque, ou encore sous la forme d'un tube.

Le second fourreau 30 comprend, dans l'exemple, deux prises de vide 40 et 42 espacées sur la longueur du fourreau, en aval du canal de transfert 36, et situées à des emplacements où la vis logée dans le fourreau 30 provoque une détente de la matière traitée dans le fourreau. Cette vis possède, en effet, un profil non uniforme de manière à former dans le fourreau des zones où la matière est comprimée et des zones où la matière est détendue, ce qui permet de libérer les vapeurs contenues dans cette matière.

La machine de la figure 1 comprend en outre une prise d'air 44 située sur le second fourreau 30, mais en amont du canal de transfert 36, par rapport au sens de circulation de la matière, comme montré par les flèches.

Les prises de vides 40, 42 et 44 sont raccordées, par l'intermédiaire de conduites respectives 46, 48 et 50 à une pompe à vide 52 couplée à un moteur électrique 54. Cette pompe vide est, par exemple, du type anneau liquide et comporte des moyens de réglage de la valeur de la dépression.

La machine de la figure 1 fonctionne de la façon suivante:

la matière première à l'état brut et finement divisée, par exemple sous forme pulvérulente, est introduite dans la trémie 28 et de là dans l'extrémité gauche (sur le dessin) du premier fourreau 22. Elle est acheminée un débit régulier par les deux vis logées dans ce fourreau vers l'extrémité opposée du fourreau, jusqu'au niveau du conduit vertical de transfert 36, et cela sans subir de cisaillement. Dans le premier fourreau 22 la matière est chauffée et subit un début de gélification pour former une masse ramollie ou fondue. Cette masse fondue circule ensuite dans le canal de transfert 36, soit par gravité, soit sous l'action des moyens d'acheminement dont ce canal peut être équipé. Elle pénètre alors dans le second fourreau 30 au voisinage de son extrémité reliée au groupe réducteur 32, puis est déplacée en direction de la tête d'extrusion 38 par la vis logée dans ce second fourreau. Au fur et à mesure de son déplacement dans le second fourreau, la matière est chauffée et débarrassée de ses vapeurs, en particulier de ses monomères volatils, par l'intermédiaire des prises de vide 40, 42 et 44 couplées à la pompe 52, la prise de vide 44 située près du canal de transfert 36 servant principalement à enlever la vapeur d'eau provenant de l'humidité de la matière traitée. En outre, dans le fourreau 30, la matière est travaillée et gélifiée complètement ce qui permet son extrusion par la tête 38.

Comme indiqué plus haut, le second fourreau 30 a une longueur nettement supérieure celle du premier fourreau 22. Ceci permet non seulement de ménager des zones de dégazage intervalles espacés le long du fourreau, mais aussi d'obtenir un temps de séjour plus long de la matière l'intérieur de ce fourreau. De ce fait, cette matière subit un taux de cisaillement beaucoup plus élevé que si le second fourreau 30 était sensiblement de la même longueur que le premier fourreau 22, comme dans la technique antérieure.

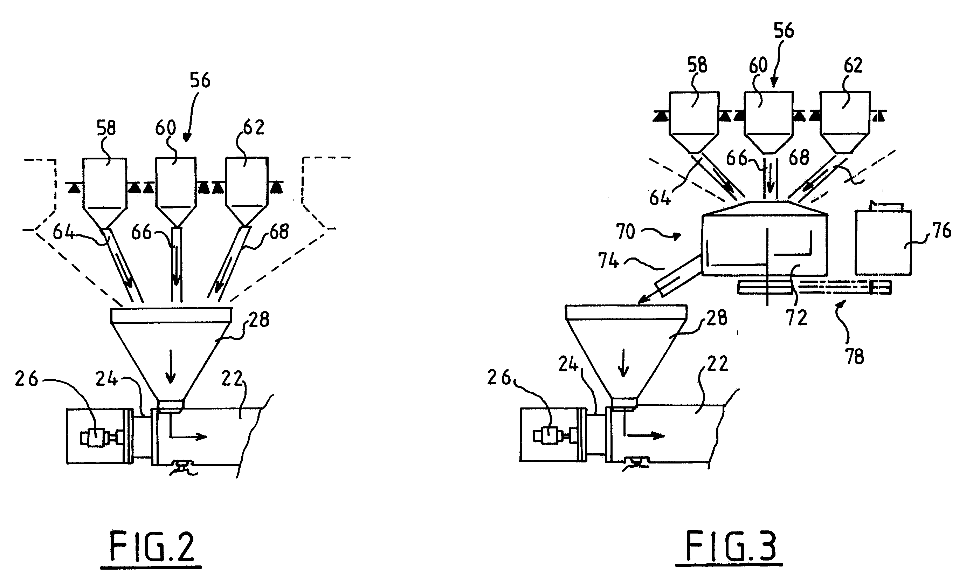

Dans la forme de réalisation de la figure 2, les moyens d'alimentation en matière première du premier fourreau 22 sont équipés d'une unité de pesage-dosage 56 qui est disposée au-dessus de la trémie 28. Cette unité 56 comprend trois récipients 58, 60 et 62 de pesage, à fond tronconique, pour la matière première et ses additifs. Les fonds de ces trois récipients débouchent respectivement sur trois conduites 64, 66 et 68 qui débouchent elles-mêmes à l'intérieur de la trémie 28. Grâce l'unité 56, on peut peser et doser avec précision la matière première proprement dite et deux additifs destinés à être mélangés à cette matière première. Dans le cas où plus de deux additifs doivent être ajoutés, l'unité 56 peut comprendre plus de trois récipients.

Dans la forme de réalisation de la figure 3, les moyens d'alimentation en matière première du premier fourreau 22 sont équipés d'une unité de pesage-dosage 56 analogue à celle de la figure 2 et d'une unité de mélange 70. Les conduits 64, 66 et 68 de l'unité 56 débouchent dans le mélangeur 72 de l'unité 70. Ce mélangeur est muni d'un tuyau de sortie 74 qui débouche directement au-dessus de la trémie 28. Ce mélangeur est entraîné par un moteur électrique 76 au moyen d'un dispositif de transmission 78.

L'utilisation combinée de l'unité de pesage-dosage 56 et de l'unité de mélange 70 est particulièrement avantageuse car elle permet d'assurer un pré-mélange des différents constituants déjà dosés.

Les machines conformes aux figures 2 et 3 sont donc particulièrement avantageuses non seulement dans le cas où des additifs doivent être ajoutés à la matière première, mais également dans le cas où la matière première peut être constituée elle-même d'une composition de plusieurs constituants.

Les machines telles que représentées aux figures 1 à 3 conviennent particulièrement à la fabrication de produits finis extrudés à partir d'une matière première telle qu'un terpo lymère acrylonitrile-butadiène-styrène (ABS).

Cette matière première est fabriquée dans l'industrie en combinant une résine constituée par un copolymère de styrène et d'acrylonitrile avec un butadiène greffé, ce butadiène pouvant être greffé soit avec de l'acrylonitrile, soit avec du styrène.

Cette matière thermoplastique, disponible dans le commerce, est pulvérulente et se présente sous la forme de poudre, de micro-billes, etc...

Cette matière première pulvérulente est donc introduite dans la trémie 28 en même temps que les additifs qui doivent se présenter également sous une forme finement dispersée, par exemple sous forme pulvérulente ou liquide.

Grâce au procédé de l'invention, le produit fini qui sort de la tête d'extrusion de la machine possède des propriétés physiques particulièrement avantageuses. Ainsi, dans le cas de l'ABS, on obtient une résistance mécanique élevée, particulièrement aux chocs, par la non propagation des micro-fissures initiées en surface. Ces qualités de résistance aux chocs sont conservées aussi bien à basse température, c'est-à-dire aux environs de -40°C, qu'à température élevée, c'est-à-dire aux environs de 80 à 100°C.

A résistance mécanique égale, les produits finis obtenus par le procédé de l'invention peuvent avoir une épaisseur plus faible que les produits finis obtenus par les procédés en deux opérations de la technique antérieure.

Bien que l'invention trouve une application particulière à la fabrication de produits finis en acrylonitrile-butadiène-styrène, elle s'applique également à l'obtention de produits finis à partir d'autres matières thermoplastiques à caractère hygroscopique.

De même, la machine décrite précédemment ne constitue qu'un exemple de machine pouvant être utilisée pour la mise en oeuvre du procédé de l'invention. Ainsi, les deux fourreaux, au lieu d'être superposés verticalement, pourraient être disposés l'un à la suite de l'autre ou bien perpendiculairement l'un à l'autre, l'essentiel étant que le deuxième fourreau soit modifié pour permettre notamment le dégazage de la matière à traiter.

De même, au lieu d'utiliser une seule tête d'extrusion, il est envisageable de prévoir une tête de co-extrusion pour l'obtention de produits stratifiés.

## Revendications

1. Procédé de fabrication d'un produit fini par extrusion à partir d'une matière thermoplastique extrudable de caractère hygroscopique, en particulier d'une matière styrénique, en une seule opération, en utilisant comme matière première la matière thermoplastique à l'état brut et finement divisée, caractérisé en ce qu'on transforme d'abord la matière première, sous l'action de la chaleur, dans un premier fourreau horizontal équipé de deux vis parallèles de transfert, pour former une masse fondue et en ce qu'on dégaze et extrude ensuite cette masse fondue dans un second fourreau horizontal relié au premier fourreau et équipé d'une seule vis de transfert, pour fournir directement le produit fini extrudé à partir de la matière première.

2. Procédé selon la revendication 1, caractérisé en ce que la matière thermoplastique est un polymère ou copolymère du type styrènique, oléfinique ou chloré.

3. Procédé selon l'une des revendications 1 et 2, caractérisé en ce que la matière thermoplastique est un terpolymère acrylonitrile-butadiène-styrène ou ABS.

4. Procédé selon l'une des revendications 1 à 3, caractérisé en ce que la matière thermoplastique est chargée, par exemple par une charge minérale.

5. Procédé selon l'une des revendications 1 à 4, caractérisé en ce que la matière thermoplastique comprend un seul constituant thermoplastique.

6. Procédé selon l'une des revendications 1 à 4, caractérisé en ce que la matière thermoplastique est une composition de plusieurs constituants thermoplastiques.

7. Procédé selon l'une des revendications 1 à 6, caractérisé en ce que la matière première comprend en outre des adjuvants solides ou liquides, à l'état finement divisé, par exemple des antioxydants, des lubrifiants, des pigments, des ignifugeants ou des agents auto-extinguibles.

8. Machine d'extrusion pour la mise en oeuvre du procédé selon l'une des revendications 1 à 7, comprenant un premier fourreau horizontal (22) muni de moyens d'alimentation (28) en matière première et de moyens de transfert à vis et un second fourreau horizontal (30) relié au premier fourreau par un canal de transfert (36) et muni de moyens de transfert à vis, caractérisé en ce que le premier fourreau (22) est équipé de deux vis parallèles de transfert et en ce que le second fourreau (30) est équipé d'une seule vis de transfert, de moyens de dégazage de la matière (40,42,44,52) et d'une tête d'extrusion (38) pour l'obtention directe du produit fini.

9. Machine selon la revendication 8, caractérisé en ce que les moyens de dégazage comprennent au moins une prise de vide (40,42,44) reliée à une pompe à vide (52).

10. Machine selon la revendication 9, caractérisée en ce qu'elle comprend plusieurs prises de vide (40,42) espacées sur la longueur du second fourreau (30), en aval du canal de transfert (36), et situées à des emplacements où les moyens de transfert à vis provoquent une détente de la matière traitée dans le fourreau.

11. Machine selon l'une des revendications 8 et 9, caractérisée en ce qu'elle comprend en outre une prise de vide (44) située sur le second fourreau (30) en amont du canal de transfert (36).

12. Machine selon l'une des revendications 8 à 11, carac térisée en ce que les moyens d'alimentation (28) en matière première du premier fourreau (22) sont équipés d'une unité de pesage-dosage (56).

13. Machine selon l'une des revendications 8 à 11, caractérisée en ce que les moyens d'alimentation (28) en matière première du premier fourreau (22) sont équipés d'une unité de pesage-dosage (56) et d'une unité de mélange (70).

14. Machine selon l'une des revendications 8 à 13, caractérisée en ce que le premier fourreau (22) et le second fourreau (30) sont verticalement superposés.

15. Machine selon l'une des revendications 8 à 14, caractérisée en ce que la longueur du second fourreau (30) est au moins le double de celle du premier fourreau (22).

EP 0 311 520 A1

58    56    62
58    60    62

64    66    68

28

26    24    22

**FIG.2**

58    56    62
58    60    62

64    66    68

70    76

74

26    24    28    22

72

78

**FIG.3**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 169 306 (MITSUBISHI JUKOGYO K.K.) <br> * Page 2, lignes 10-12; revendications 1,4,10,11; figure 2 * <br> --- | 1-15 | B 29 C 47/50 <br> B 29 C 47/76 |
| Y | US-A-4 004 787 (H. ELLWOOD et al.) <br> * Colonne 5, lignes 47-62; figures 1,3 * <br> --- | 1-15 | |
| A | PLASTVERARBEITER, vol. 32, no. 7, juillet 1981, pages 811-818, Speyer/Rhein, DE; D. ANDERS: "Entgasen in Einschneckenextrudern für die Aufbereitung von Thermoplasten" <br> * Figures 1,3,5,6,11 * <br> --- | 1-13 | |
| A,D | EP-A-0 204 622 (McNEIL AKRON REPIQUET) <br> * Revendications 1,6,7; figure * <br> --- | 8,14 | |
| A | FR-A-2 459 125 (HERMANN BERSTORFF MASCHINENBAU GmbH) <br> * Figures 1-4 * <br> --- | 8,15 | DOMAINES TECHNIQUES RECHERCHES (Int. Cl.4) |
| A | US-A-4 127 635 (R.J. GAUTHIER) <br> * Revendications 1,8; figures 1,2 * <br> --- | 1-10 | B 29 C |
| A | US-A-3 467 743 (K. OTANI) <br> * Résumé; figure 2 * <br> --- | 1,8,11 | |
| A | FR-A-2 565 887 (EMS EXTRUSION) <br> * Page 2, lignes 4-28; figure 1 * <br> --- | 1,8 | |
| A | FR-A-2 134 549 (BARMAG BARMER MASCHINENFABRIK AG) <br> * Revendications 1,4; figure 1 * <br> ---     -/- | 1,8,9 | |

Le présent rapport a été établi pour toutes les revendications

| Lieu de la recherche | Date d'achèvement de la recherche | Examinateur |
|---|---|---|
| LA HAYE | 12-01-1989 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
               
& : membre de la même famille, document correspondant

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 963 558 (R.H. SKIDMORE)<br>* Figure * | 8-11 | |
| A | US-A-2 836 851 (J.E. HOLT)<br>* Figures 1,2 * | 8,9,11 | |
| A | FR-A-2 517 087 (WERNER & PFLEIDERER)<br>* Figures 1,2 * | 12,13 | |
| A | DE-A-3 303 766 (A. SCHLEBERGER)<br>* Figures * | 12 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| LA HAYE | 12-01-1989 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)